# EUROPEAN PATENT APPLICATION

(11) **EP 2 887 343 A2**
(43) Date of publication of application: **24.06.2015**
(21) Application number: 14275100.7
(22) Date of filing: 02.05.2014
(51) Int. Cl.: G09G 3/20

(54) **Electronic tag, electronic shelf label system, and method for operating the same**

(30) Priority: 20.12.2013 KR 20130160634
(71) Applicant: Samsung Electro-Mechanics Co., Ltd., Gyeonggi-do (KR)
(72) Inventor: Ryu, Hoon, Gyeonggi-Do (KR)
(74) Representative: Potter Clarkson LLP

(57) **Abstract**

An electronic shelf label system may include: a tag remote controller, after pairing is established conforming to a predetermined wireless communications protocol, sending a request for screen changing via wireless communications associated with the pairing; and an electronic tag, if the approach of a user thereto is sensed, establishing pairing with the tag remote controller that the user carries and performing screen changing according to the request for screen changing from the tag remote controller paired therewith.

## Description

### CROSS-REFERENCE TO RELATED APPLICATION

This application claims the benefit of Korean Patent Application No. 10-2013-0160634 filed on December 20, 2013, with the Korean Intellectual Property Office, the disclosure of which is incorporated herein by reference.

### BACKGROUND

The present disclosure relates to an electronic tag, an electronic shelf label system, and a method for operating the same.

Traditionally, information on merchandise items on a display shelf has been displayed on paper tags on which prices are hand-written or printed. Such paper tags have disadvantages in that they have to be replaced whenever price information for merchandise items is changed or positions of displayed merchandise items are changed.

In order to overcome the disadvantages of paper tags, electronic tags are being researched and developed. Recently, electronic tags have been applied limitedly applied to display shelves. Such electronic tags are often referred to as an electronic shelf label (ESL) system.

Typically, an electron shelf label (ESL) system is installed on a display shelf so that it electronically displays and changes merchandise item information.

Such ESL system may include a high-level server, a plurality of gateways wire-connected to the high-level server, and a plurality of electronic tag groups, each wirelessly connected to corresponding gateways of the plurality of gateways.

The high-level server may provide merchandise item information including price information to each of the gateways using wired communications.

Each of the plurality of gateways may transmit the merchandise item information received from the high-level server to a corresponding electronic tag group using wireless communications.

Then, the corresponding electronic tag group may receive the merchandise item information wirelessly and display price information included in the merchandise item information on a display unit.

Such an electronic shelf label system has an advantage in that it can update merchandise item information automatically using wireless communications and that it can quickly change merchandise item information.

Compared to paper tags, however, a plurality of electronic tags is required in a store and accordingly, the price of the electronic tags has to be affordable in terms of installation costs. In addition, since electronic tags are powered by secondary cell batteries, power consumed by such an electronic shelf label system should be relatively low.

Since a screen component of an electronic tag is especially expensive and power-consuming, the size of the screen has to be reduced or a screen component that is cheap and has low power consumption, such an E-paper, is used as a display component.

In an existing ESL system, however, reducing the size of a screen of an electronic tag results in limitations on displayed information, and thus, only a minimal amount of information such as merchandise item name and price information can be actually displayed.

Therefore, a novel method is required, allowing for a larger amount of information to be displayed on a small screen of an electronic tag.

Patent Document 1 below relates to an image display control device and a screen display control method. However, the document does not disclose the features of changing a screen when a user approaches an electronic tag or manipulating a screen of an electronic tag using a tag remote controller, paired with the electronic tag.

### [Related Art Document]

(Patent Document 1) Korean Patent Laid-Open Publication No. 2012-0070500

### SUMMARY

An aspect of the present disclosure may provide an electronic tag, an electronic shelf label system and a method for operating the same, in which a screen of the electronic tag can be changed when a user approaches to the electronic tag, and the screen can be manipulated by using a tag remote controller paired with the electronic tag.

According to an aspect of the present disclosure, an electronic tag may include: a memory storing information to be displayed on a screen therein; an approach sensor unit sensing the approach of a user to the electronic tag and providing an approach sensing signal; a control unit controlling screen changing according to the approach sensing signal; and a display unit executing screen changing using the information stored in the memory under the control of the control unit.

According to another aspect of the present disclosure, an electronic shelf label system may include: a tag remote controller, after pairing is established conforming to a predetermined wireless communications protocol, sending a request for screen changing via wireless communications associated with the pairing; and an electronic tag, if the approach of a user thereto, establishing pairing with the tag remote controller that the user carries and performing screen changing according to the request for screen changing from the tag remote controller paired therewith.

The tag remote controller may include: an input unit for a user input including a request for screen changing; a control unit establishing the pairing and controlling an operation according to an input via the input unit; and a wireless communications unit transmitting a screen changing request signal to the electronic tag under the control of the control unit.

The electronic tag may include: a memory storing information to be displayed on a screen therein; an approach sensor unit sensing the approach of a user to the electronic tag and providing an approach sensing signal; a control unit, upon receiving the approach sensing signal, controlling the establishment of the pairing with the tag remote controller; a wireless communications unit performing wireless communications with the tag remote controller and a management apparatus under the control of the control unit; and a display unit executing screen changing using the information stored in the memory under the control of the control unit.

The approach sensor unit may include an infrared ray sensor sensing the approach of a user to the electronic tag using an infrared ray from a user.

According to another aspect of the present disclosure, an electronic shelf label system may include: a tag remote controller establishing pairing conforming to a predetermined wireless communications protocol and sending a request for screen changing via wireless communications associated with the pairing; an electronic tag, if the approach of a user thereto is sensed, establishing pairing with the tag remote controller that the user carries and performing screen changing using merchandise item received by sending a request for merchandise item information; and a management apparatus providing the electronic tag with corresponding merchandise information and providing the electronic tag with merchandise item information prepared in advance according to the request for merchandise item information from the electronic tag.

The electronic tag may perform screen changing upon receiving a request for screen changing from the tag remote controller.

The tag remote controller may include: an input unit for an input including a request for screen changing; a control unit establishing the pairing and controlling an operation according to an input via the input unit; and a wireless communications unit transmitting a screen changing request signal to the electronic tag under the control of the control unit.

The electronic tag may include: a memory storing information to be displayed on a screen therein; an approach sensor unit sensing the approach of a user to the electronic tag and providing an approach sensing signal; a control unit, upon receiving the approach sensing signal, controlling the pairing conforming to a predetermined communications protocol with the tag remote controller, sending a request for screen information displayed from the management apparatus to receive and store it after the pairing is established, and controlling screen changing; a wireless communications unit sending a request for merchandise item information to the management apparatus to receive the merchandise item information under the control of the controller; and a display unit executing screen changing using the information stored in the memory under the control of the control unit.

The approach sensor unit may include an infrared ray sensor sensing the approach of a user to the electronic tag using an infrared ray from a user.

According to another aspect of the present disclosure, a method for operating an electronic tag may include: sensing, by an approach sensor unit, that a user has approached an electronic tag to provide an approach sensing signal; and upon receiving the approach sensing signal, performing, by a control unit, screen changing via a display unit using information stored in a memory unit.

According to another aspect of the present disclosure, a method for operating an electronic shelf label system may include: sensing, by an electronic tag, whether a user approaches to the electronic tag; if the electronic tag determines that a user has approached the electronic tag, sending a request for merchandise item information to a management apparatus and receiving the merchandise item information; and performing, by the electronic tag, screen changing using the received merchandise item information.

The receiving of the merchandise item information may include: requesting, by the electronic tag, for merchandise item information for screen changing from the management apparatus; and upon receiving a request for merchandise item information for screen changing, providing, by the management apparatus, the electronic tag with merchandise item information prepared in advance.

According to another aspect of the present disclosure, a method for operating an electronic shelf label system may include: sensing, by an electronic tag, whether a user approaches to the electronic tag; if the electronic tag determines that a user has approached the electronic tag, establishing pairing with a tag remote controller that the user carries, conforming to a predetermined communications protocol; once the pairing is established, performing screen changing using merchandise item information prepared in advance; and performing screen changing according to a request for screen changing from the tag remote controller.

The establishing of the pairing may include: upon receiving the approach sensing signal, transmitting, by the electronic tag, a pairing request signal to the tag remote controller that a user carries; and transmitting, by the tag remote controller, a pairing response signal in response to the pairing request signal from the electronic tag, to establish pairing.

The sensing whether a user approaches may include sensing whether a user approaches using an infrared ray sensor based on an infrared ray from the user.

According to another aspect of the present disclosure, a method for operating an electronic shelf label system may include: sensing, by an electronic tag, whether a user approaches to the electronic tag; if the electronic tag determines that a user has approached the electronic tag, establishing pairing with a tag remote controller that a user carries, conforming to a predetermined communications protocol; once the pairing is established, requesting, by the electronic tag, merchandise item information from a management apparatus and receiving the merchandise item information; and; performing, by the electronic tag, screen changing using the received merchandise item information.

The method may further include: changing, by the electronic tag, a screen according to a request for screen changing from the tag remote controller.

The establishing of the pairing may include: upon receiving the approach sensing signal, transmitting, by the electronic tag, a pairing request signal conforming to a communications protocol to the tag remote controller that a user carries; and transmitting, by the tag remote controller, a pairing response signal in response to the pairing request signal from the electronic tag to establish pairing.

The sensing whether a user approaches may include sensing whether a user approaches using an infrared ray sensor based on an infrared ray from the user.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a diagram illustrating the configuration of an electronic shelf label system according to an exemplary embodiment of the present disclosure;
FIG. 2 is a diagram for illustrating the operation of an electronic shelf label system according to an exemplary embodiment of the present disclosure;
FIG. 3 is a block diagram of a tag remote controller according to an exemplary embodiment of the present disclosure;
FIG. 4 is a block diagram of an electronic tag according to an exemplary embodiment of the present disclosure;
FIG. 5 is a flowchart for illustrating a method for operating an electronic tag according to an exemplary embodiment of the present disclosure;
FIG. 6 is a flowchart for illustrating a method for operating an electronic shelf label system according to an exemplary embodiment of the present disclosure;
FIG. 7 is a flowchart for illustrating a method for operating an electronic shelf label system according to an exemplary embodiment of the present disclosure; and
FIG. 8 is a flowchart for illustrating a method for operating an electronic shelf label system according to an exemplary embodiment of the present disclosure.

### DETAILED DESCRIPTION

Hereinafter, embodiments of the present disclosure will be described in detail with reference to the accompanying drawings. The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art. In the drawings, the shapes and dimensions of elements may be exaggerated for clarity, and the same reference numerals will be used throughout to designate the same or like elements.

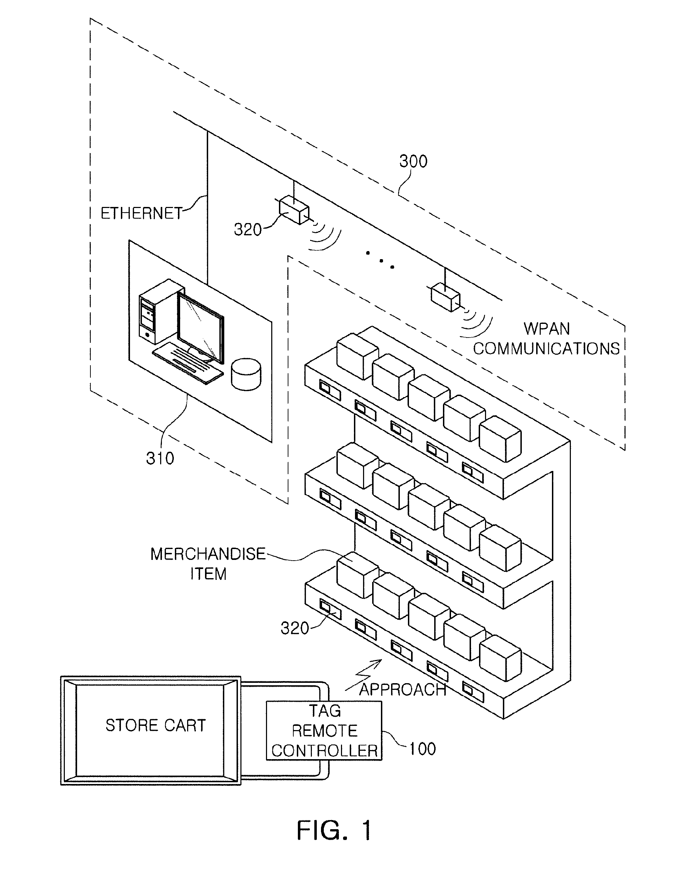

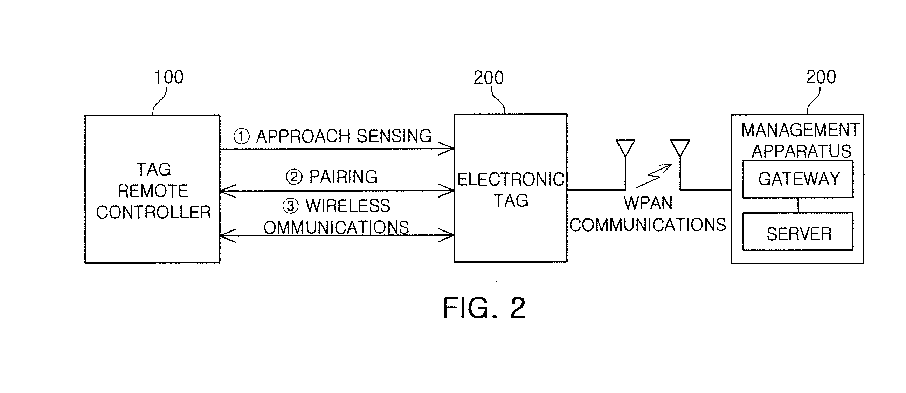

FIG. 1 is a diagram illustrating the configuration of an electronic shelf label system according to an exemplary embodiment of the present disclosure, and FIG. 2 is a diagram for illustrating the operation of an electronic shelf label system according to an exemplary embodiment of the present disclosure.

Referring to FIGS. 1 and 2, the electronic shelf label system according to an exemplary embodiment of the present disclosure may include a tag remote controller 100, an electronic tag 200, and a management apparatus 300.

The tag remote controller 100 may be paired with the electronic tag 200 conforming to a predetermined wireless communications protocol, and then may send a request for screen changing to the electronic tag 200 via the wireless communications associated with the pairing. The tag remote controller 100 may be installed in, but is not limited to, a membership card.

Referring to FIG. 2, when the electronic tag 200 senses that a user has approached, the electronic tag 200 may establish pairing with a tag remote controller 100 that the user carries, and may perform a change of a screen according to a request for screen changing from the paired tag remote controller 100.

The management apparatus 300 may establish a wireless communications network with the electronic tag 200 so as to provide the electronic tag 200 with merchandise item information on a corresponding merchandise item. In addition to the merchandise item information basically provided to the electronic tag, the management apparatus 300 may provide additional merchandise item information, which is separately prepared in advance, upon request.

The merchandise item information may include, but is not limited to, a merchandise item name, a manufacture place, a manufacturer, a manufacture date, and price.

Further, the merchandise item information basically provided by the management apparatus 300 to the electronic tag 200 may include, but is not limited to, price information and the additional merchandise information may include, but is not limited to, other merchandise information than price.

The management apparatus 300 may include a server and repeaters. For example, the server may be connected to the repeaters via a wired network such as Ethernet and may control the repeaters so that it transmits merchandise item information to each of a plurality of electronic tags. The repeaters may be connected to the server via a wired network and may transmit information from the server to a corresponding electronic tag 200. For example, the repeaters may be gateways that perform wireless personal area network (WPAN) communications conforming to the IEEE 802.15.4 standard with a plurality of electronic tags 200.

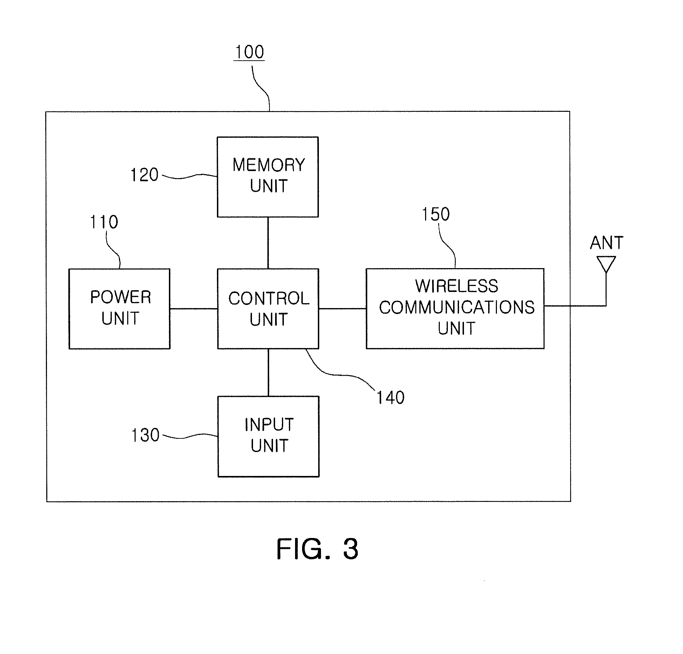

FIG. 3 is a block diagram of a tag remote controller according to an exemplary embodiment of the present disclosure.

Referring to FIG. 3, the tag remote controller 100 may include an input unit 130, a control unit 140, and a wireless communications unit 150.

In addition, the tag remote controller 100 may further include a power unit 110 and a memory unit 120.

The power unit 110 may provide operation voltage required by the tag remote controller 100 for operation. For example, the power unit 110 may be, but is not limited to, a battery or a rechargeable battery.

The memory unit 120 may include the operation state information required by the tag remote controller 100 for operation and identification information ID of the tag remote controller. The identification information ID may be used to identify a tag remote controller from among a plurality of tag remote controllers. For example, the identification information ID may be a MAC address, and such identification information ID may be included in a wireless transmission/reception signal so as to for an electronic tag and a tag remote controller to identify each other.

The input unit 130 may be an input device to input a user's input including a request for screen changing and may be implemented as a button-type, a touch-type or a combination thereof. In addition to the request for screen changing, the user input may include, but is not limited to, a request for pairing establishment, and a request for pairing cancellation.

The control unit 140 may perform the pairing with the electronic tag 200 and may control the operation of the tag remote controller 100 according to an input via the input unit 130. The pairing may be automatically performed when a request for pairing is received from the electronic tag 200. Alternatively, the pairing may or may not be performed depending on a user's permission via the input unit 130 when a request for pairing is received.

Then, the wireless communications unit 150 may transmit a signal to request for screen changing to the electronic tag 200 under the control of the control unit 140. Here, a wireless communications scheme may be, but is not limited to, wireless personal area network (WPAN) communications conforming to the IEEE 802.15.4 standard.

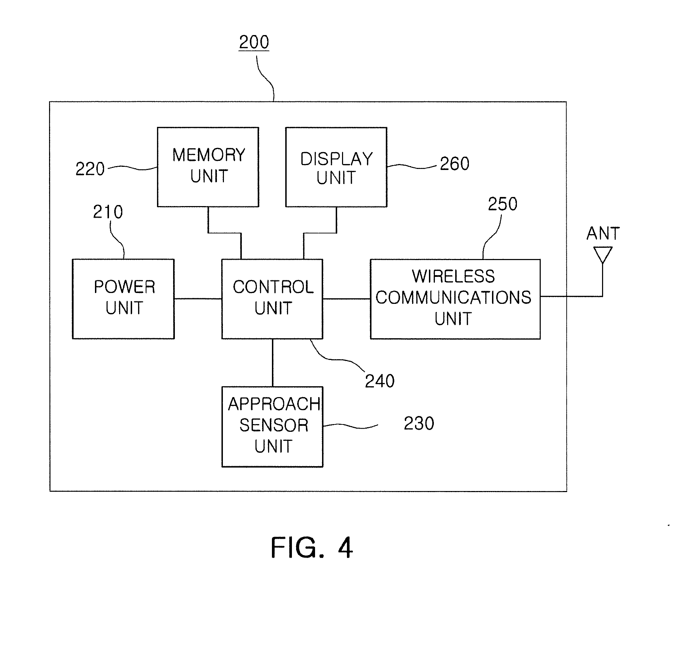

FIG. 4 is a block diagram of an electronic tag according to an exemplary embodiment of the present disclosure.

Referring to FIG. 4, the electronic tag 200 may include a memory 220, an approach sensor unit 230, a control unit 240, a wireless communications unit 250, and a display unit 260.

In addition, the electronic tag 200 may further include a power unit 210.

The power unit 210 may provide operation voltage required by the electronic tag 200 for operation. For example, the power unit 210 may be, but is not limited to, a battery or a rechargeable battery.

The memory unit 220 may store therein the operation state information required by the electronic tag 200 for operation and merchandise item information, as well as information to be displayed on a screen and identification information ID. The identification information ID may be used to identify an electronic tag from among a plurality of electronic tags. For example, the identification information ID may be a MAC address, as described above.

The approach sensor unit 230 may sense whether a user approaches to the electronic tag and may provide an approach sensing signal to the control unit 240. The approach sensor unit 230 may include an infrared ray sensor that senses the approach of a user to the electronic tag based on an infrared ray from a user.

The approach sensor unit 230 may adjust sensitivity so that it may distinguish a user who watches a merchandise item from users who just pass by.

The control unit 240 may control screen changing according to the approach sensing signal.

Alternatively, upon receiving the approach sensing signal, the control unit 240 may perform the pairing with the tag remoter controller 100 and may control screen changing if the pairing is established.

Alternatively, when sensing the approach of a user to the electronic tag, the control unit 240 may establish pairing with the tag remote controller 100 that the user carries, may send a request for merchandise item information to the management apparatus 300 so as to receive the requested merchandise item information, and may control screen changing using the received merchandise item information.

The control unit 240 may control screen changing upon receiving a request for screen changing from the tag remote controller 100.

The wireless communications unit 250 may perform wireless communications with the tag remote controller 100 and the management apparatus 300 under the control of the control unit 240. At this time, the wireless communications unit 250 may receive a request for screen changing from the tag remote controller 100 and may receive basic merchandise item information from the management apparatus 300.

Further, the wireless communications unit 250 may request additional merchandise item information from the management apparatus 300 under the control of the control unit 240, in addition to the basic merchandise item information.

Further, the display unit 260 may execute screen changing using information stored in the memory 220 under the control of the control unit 240.

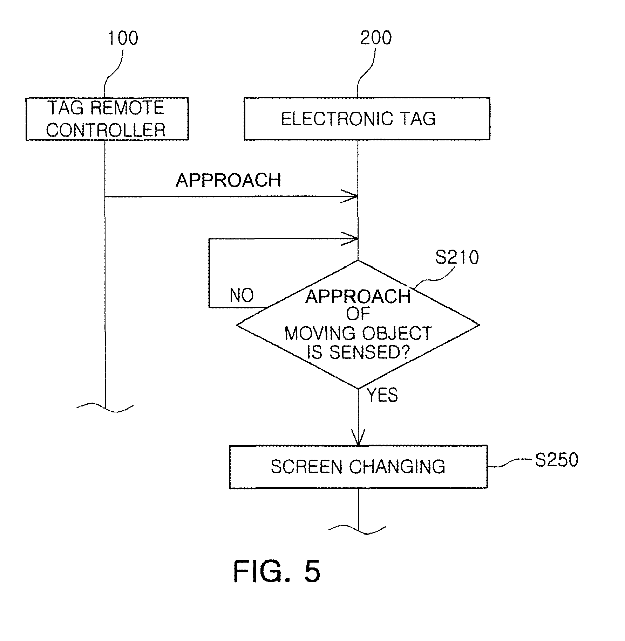

FIG. 5 is a flowchart for illustrating a method for operating an electronic tag according to an exemplary embodiment of the present disclosure.

The method for operating an electronic tag according to the exemplary embodiments of the present disclosure will be described below with reference to FIGS. 1 through 5. In describing the method for operating an electronic tag according to the exemplary embodiment of the present disclosure, the above descriptions with reference to FIGS. 1 through 4 may be equally applied, and thus redundant descriptions will not made.

Initially, the approach sensor unit 230 may sense that a user has approached the electronic tag 200 and may provide an approach sensing signal to the control unit 240 (S210).

Then, upon receiving the approach sensing signal, the control unit 240 may perform screen changing via the display unit 260 using the information in the memory unit 220 (S250).

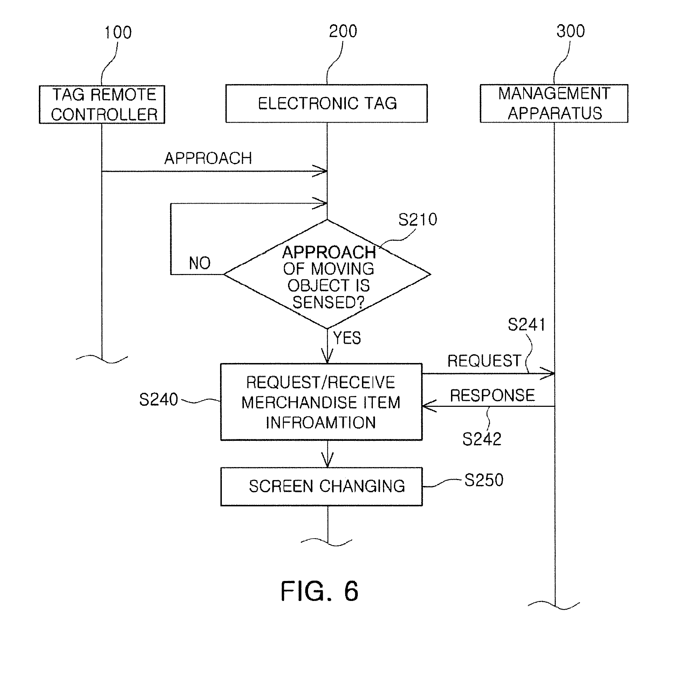

FIG. 6 is a flowchart for illustrating a method for operating an electronic shelf label system according to an exemplary embodiment of the present disclosure.

The method for operating an electronic shelf label system according to the exemplary embodiments of the present disclosure will be described below with reference to FIGS. 1 through 4 and 6. In describing the method for operating an electronic shelf label system according to the exemplary embodiment of the present disclosure, the above descriptions with reference to FIGS. 1 through 4 may be equally applied, and thus redundant descriptions will not made.

Initially, the electronic tag 200 may sense whether a user approaches to it (S210).

Then, when the electronic tag 200 senses that a user has approached, the electronic tag 200 may request merchandise item information from the management apparatus 300 and receive the merchandise item information (S240).

Then, the electronic tag 200 may perform screen changing using the received merchandise item information (S250).

More specifically, the receiving of the merchandise item information S240 may include requesting, by the electronic tag 200, for merchandise item information for screen changing from the management apparatus 300 (S241). Then, upon receiving the request for merchandise item information for screen changing, the management apparatus 300 may provide the electronic tag 200 with merchandise item information that is prepared in advance (S242).

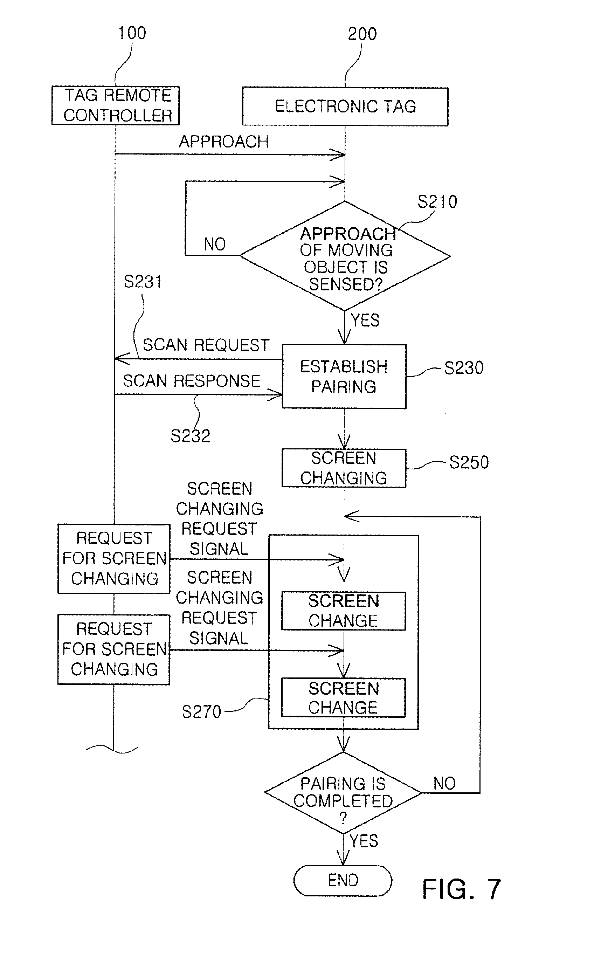

FIG. 7 is a flowchart for illustrating a method for operating an electronic shelf label system according to an exemplary embodiment of the present disclosure.

The method for operating an electronic shelf label system according to the exemplary embodiments of the present disclosure will be described below with reference to FIGS. 1 through 4 and 7. In describing the method for operating an electronic shelf label system according to the exemplary embodiment of the present disclosure, the above descriptions with reference to FIGS. 1 through 4 may be equally applied, and thus redundant descriptions will not made.

Initially, the electronic tag 200 may sense whether a user approaches to it (S210).

Then, when the electronic tag 200 senses that a user has approached, the electronic tag 200 may perform pairing with the tag remote controller 100 that the user carries confirming to a predetermined communications protocol (S230).

Then, when the pairing is established, the electronic tag 200 may perform screen changing using merchandise item information prepared in advance (S250).

Then, the control unit 240 may perform screen changing upon receiving a request for screen changing from the tag remote controller 100 (S270).

Now, the performing of the pairing S230 will be described in detail.

Initially, upon receiving the approach sensing signal, the electronic tag 200 may transmit a pairing request signal Scan Request to the tag remote controller 100 that a user carries (S231). Then, the tag remote controller 100 may transmit a pairing response signal Scan Response in response to the pairing request signal from the electronic tag 200 so as to establish pairing (S232).

Further, the sensing that the user approaches (S210) may include sensing the approach of a user using an infrared ray sensor based on an infrared ray from the user.

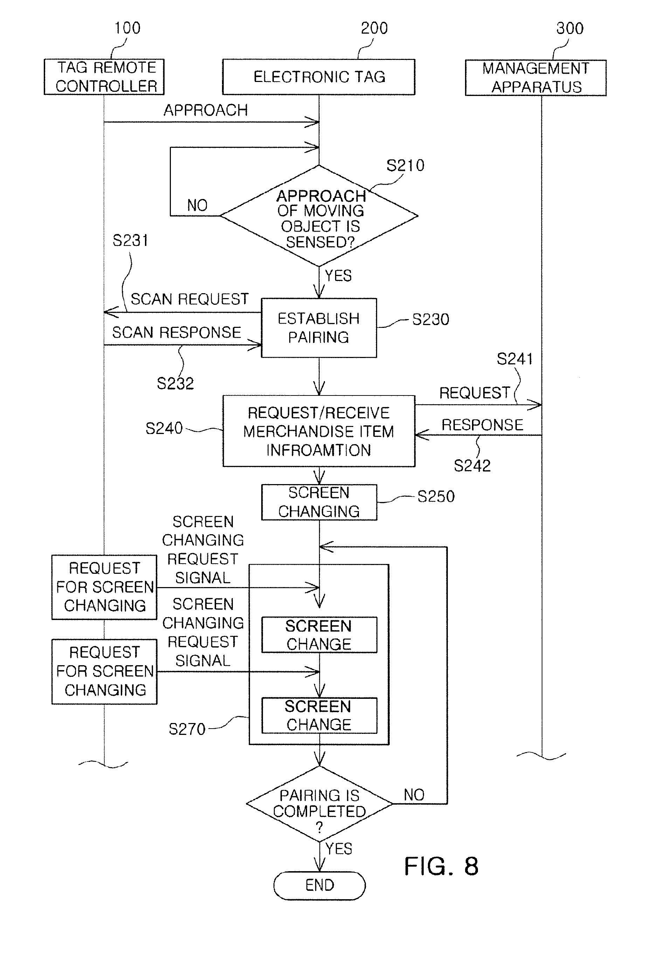

FIG. 8 is a flowchart for illustrating a method for operating an electronic shelf label system according to an exemplary embodiment of the present disclosure.

The method for operating an electronic shelf label system according to the exemplary embodiments of the present disclosure will be described below with reference to FIGS. 1 through 4 and 8. In describing the method for operating an electronic shelf label system according to the exemplary embodiment of the present disclosure, the above descriptions with reference to FIGS. 1 through 4 may be equally applied, and thus redundant descriptions will not made.

Initially, the electronic tag 200 may sense whether a user approaches to it (S210).

Then, when the electronic tag 200 senses that a user has approached, the electronic tag 200 may perform pairing with the tag remote controller 100 that the user carries confirming to a predetermined communications protocol (S230).

Then, when the pairing is established, the electronic tag 200 may request merchandise item information from the management apparatus 300 and receive the merchandise item information (S240).

Then, the electronic tag 200 may perform screen changing using the received merchandise item information (S250).

Then, the electronic tag 200 may perform screen changing upon receiving a request for screen changing from the tag remote controller 100 (S270).

Now, the performing of the pairing S230 will be described in detail.

Initially, upon receiving the approach sensing signal, the electronic tag 200 may transmit a pairing request signal conforming to a communications protocol to the tag remote controller 100 that a user carries (S231). Then, the tag remote controller 100 may transmit a pairing response signal in response to the pairing request signal from the electronic tag 200 so as to establish pairing (S232).

Further, the sensing that the user approaches (S210) may include sensing the approach of a user using an infrared ray sensor based on an infrared ray from the user.

According to exemplary embodiments of the present disclosure as described above, in an electronic shelf label system, a screen displayed on an electronic tag can be changed as a user approaches to it, and the screen displayed on the electronic tag can be repeatedly changed by using a tag remote controller.

As set forth above, according to exemplary embodiments of the present disclosure, a screen of an electronic tag can be changed when a user approaches to the electronic tag, and the screen can be manipulated by using a tag remote controller paired with the electronic tag.

While exemplary embodiments have been shown and described above, it will be apparent to those skilled in the art that modifications and variations could be made without departing from the spirit and scope of the present disclosure as defined by the appended claims.

## Claims

1. An electronic tag, comprising:
a memory storing information to be displayed on a screen therein;
an approach sensor unit sensing the approach of a user to the electronic tag and providing an approach sensing signal;
a control unit controlling screen changing according to the approach sensing signal; and
a display unit executing screen changing using the information stored in the memory under the control of the control unit.

2. An electronic shelf label system, comprising:
a tag remote controller, after pairing is established conforming to a predetermined wireless communications protocol, sending a request for screen changing via wireless communications associated with the pairing; and
an electronic tag, if the approach of a user thereto is sensed, establishing pairing with the tag remote controller that the user carries and performing screen changing according to the request for screen changing from the tag remote controller paired therewith.

3. The electronic shelf label system of claim 2, wherein the tag remote controller includes:
an input unit for a user input including a request for screen changing;
a control unit establishing the pairing and controlling an operation according to an input via the input unit; and
a wireless communications unit transmitting a screen changing request signal to the electronic tag under the control of the control unit.

4. The electronic shelf label system of claim 2, wherein the electronic tag includes:
a memory storing information to be displayed on a screen therein;
an approach sensor unit sensing the approach of a user to the electronic tag and providing an approach sensing signal;
a control unit, upon receiving the approach sensing signal, controlling the establishment of the pairing with the tag remote controller;
a wireless communications unit performing wireless communications with the tag remote controller and a management apparatus under the control of the control unit; and
a display unit executing screen changing using the information stored in the memory under the control of the control unit.

5. The electronic shelf label system of claim 4, wherein the approach sensor unit includes an infrared ray sensor sensing the approach of a user to the electronic tag using an infrared ray from a user.

6. An electronic shelf label system, comprising:
a tag remote controller establishing pairing conforming to a predetermined wireless communications protocol and sending a request for screen changing via wireless communications associated with the pairing;
an electronic tag, if the approach of a user thereto is sensed, establishing pairing with the tag remote controller that the user carries and performing screen changing using merchandise item received by sending a request for merchandise item information; and
a management apparatus providing the electronic tag with corresponding merchandise information and providing the electronic tag with merchandise item information prepared in advance according to the request for merchandise item information from the electronic tag.

7. The electronic shelf label system of claim 6, wherein the electronic tag performs screen changing upon receiving a request for screen changing from the tag remote controller.

8. The electronic shelf label system of claim 6, wherein the tag remote controller includes:
an input unit for an input including a request for screen changing;
a control unit establishing the pairing and controlling an operation according to an input via the input unit; and
a wireless communications unit transmitting a screen changing request signal to the electronic tag under the control of the control unit.

9. The electronic shelf label system of claim 6, wherein the electronic tag includes:
a memory storing information to be displayed on a screen therein;
an approach sensor unit sensing the approach of a user to the electronic tag and providing an approach sensing signal;
a control unit, upon receiving the approach sensing signal, controlling the pairing conforming to a predetermined communications protocol with the tag remote controller, sending a request for screen information displayed from the management apparatus to receive and store it after the pairing is established, and controlling screen changing; and
a wireless communications unit sending a request for merchandise item information to the management apparatus to receive the merchandise item information under the control of the controller; and
a display unit executing screen changing using the information stored in the memory under the control of the control unit.

10. The electronic shelf label system of claim 9, wherein the approach sensor unit includes an infrared ray sensor sensing the approach of a user to the electronic tag using an infrared ray from a user.

11. A method for operating an electronic tag, comprising:
sensing, by an approach sensor unit, that a user has approached an electronic tag to provide an approach sensing signal; and
upon receiving the approach sensing signal, performing, by a control unit, screen changing via a display unit using information stored in a memory unit.

12. A method for operating an electronic shelf label system, comprising:
sensing, by an electronic tag, whether a user approaches to the electronic tag;
if the electronic tag determines that a user has approached the electronic tag, sending a request for merchandise item information to a management apparatus and receiving the merchandise item information; and
performing, by the electronic tag, screen changing using the received merchandise item information.

13. The method of claim 12, wherein the receiving of the merchandise item information includes:
requesting, by the electronic tag, for merchandise item information for screen changing from the management apparatus; and
upon receiving a request for merchandise item information for screen changing, providing, by the management apparatus, the electronic tag with merchandise item information prepared in advance.

14. A method for operating an electronic shelf label system, comprising:
sensing, by an electronic tag, whether a user approaches to the electronic tag;
if the electronic tag determines that a user has approached the electronic tag, establishing pairing with a tag remote controller that the user carries, conforming to a predetermined communications protocol;
once the pairing is established, performing screen changing using merchandise item information prepared in advance; and
performing screen changing according to a request for screen changing from the tag remote controller.

15. The method of claim 14, wherein the establishing of the pairing includes:
upon receiving the approach sensing signal, transmitting, by the electronic tag, a pairing request signal to the tag remote controller that a user carries; and
transmitting, by the tag remote controller, a pairing response signal in response to the pairing request signal from the electronic tag, to establish pairing.
